(19) Europäisches Patentamt
European Patent Office
Office européen des brevets

(11) EP 2 508 551 B1

(12) **EUROPEAN PATENT SPECIFICATION**

(45) Date of publication and mention of the grant of the patent:
**05.07.2017 Bulletin 2017/27**

(21) Application number: **10834345.0**

(22) Date of filing: **27.10.2010**

(51) Int Cl.:
***C08G 81/02*** *(2006.01)*
***B01F 17/52*** *(2006.01)*
***C08G 63/08*** *(2006.01)*
***C09B 67/20*** *(2006.01)*
***C08F 216/38*** *(2006.01)*

(86) International application number:
**PCT/JP2010/006350**

(87) International publication number:
**WO 2011/067889 (09.06.2011 Gazette 2011/23)**

(54) **POLYVINYL ACETAL/POLYESTER GRAFT COPOLYMER, AND DISPERSANT**

POLYVINYLACETAL-/POLYESTER-PFROPFCOPOLYMER UND DISPERGIERMITTEL DAMIT

COPOLYMÈRE GREFFÉ DE POLY(ACÉTAL DE VINYLE)/POLYESTER ET DISPERSANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**04.12.2009 JP 2009276161**
**04.02.2010 JP 2010023018**
**16.02.2010 JP 2010031199**
**27.07.2010 JP 2010167937**

(43) Date of publication of application:
**10.10.2012 Bulletin 2012/41**

(73) Proprietor: **Dai-Ichi Kogyo Seiyaku Co., Ltd.**
**Kyoto 600-8873 (JP)**

(72) Inventors:
- **ASAI, Chiho**
  **Kyoto-shi**
  **Kyoto 6008873 (JP)**
- **HASHIMOTO, Masayuki**
  **Kyoto-shi**
  **Kyoto 600-8873 (JP)**
- **SAIUCHI, Naofumi**
  **Kyoto-shi**
  **Kyoto 600-8873 (JP)**

(74) Representative: **Strehl Schübel-Hopf & Partner**
**Maximilianstrasse 54**
**80538 München (DE)**

(56) References cited:
**JP-A- 7 238 199**
**JP-A- 8 081 547**
**JP-A- H09 258 445**
**JP-A- 2007 002 242**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a method for producing a polyvinyl acetal/polyester graft copolymer, and to a dispersant and a dispersion.

### BACKGROUND ART

Technologies for dispersing solid particles in a nonaqueous liquid are utilized in various industrial fields. Dispersion of a pigment in the field of, for example, paints, printing inks, toners for electrostatic copying, plastics, pigment printing agents, inks for inkjet printing, inks for thermal transfer recording, resists for color filter, inks for writing, etc. is an important basic technology. In producing such a dispersion composition, there is involved such a problem that solid particles are easily aggregated. It is known that when aggregation occurs, undesirable phenomena such as a lowering of stability, a lowering of luster, tinting strength or gloss of a final product, ramification, etc. are caused. In consequence, for the purposes of preventing such aggregation from occurring and enhancing dispersibility, a dispersant is used.

As conventional nonaqueous dispersants, for example, reaction products between a polyester and a polyamine, and the like are known (Patent Documents 1 to 3). Specifically, reaction products between a hydroxystearic acid condensate and polyethyleneimine, reaction products between a polycaprolactone based polyester compound and polyallylamine, and the like are disclosed.

The majority of those dispersants have a polyamine as an anchoring group. However, if the dispersant has an amine skeleton, there was encountered such a problem that yellowing is caused at high temperatures.

In order to solve this problem, dispersants not having an amine skeleton are investigated. However, thoroughly satisfactory performances have not been revealed yet.

On the contrary, the present inventors found that a copolymer containing a polyvinyl acetal has a dispersion performance in a certain case. Patent Document 4 discloses a method for producing a lactone-modified polyvinyl acetal resin by subjecting a polyvinyl acetal to addition polymerization with a lactone monomer. However, an application as a dispersant is not described at all.

### RELATED DOCUMENTS

### PATENT DOCUMENTS

Patent Document 1: JP-A-9-176511

Patent Document 2: JP-A-7-207012

Patent Document 3: JP-A-9-169821

Patent Document 4: JP-A-8-100024

### OUTLINE OF THE INVENTION

### PROBLEMS TO BE SOLVED BY THE INVENTION

In view of the foregoing circumstances, the invention has been made, and its object is to provide a dispersant which in dispersing solid particles in various nonaqueous liquids, prevents aggregation of the solid particles in a dispersion liquid from occurring, is extremely effective for forming a stable dispersion liquid, and exhibits excellent heat resistance.

### MEANS FOR SOLVING THE PROBLEMS

The present invention provides the following.

[1] A method for producing a polyvinyl acetal/polyester graft copolymer, characterized by allowing a polyvinyl acetal having one or more of each of constituent units represented by the following general formulae (1) to (3) and having a weight average molecular weight of from 100 to 100,000 and a polyester having at least one carboxyl group at

an end of a main chain thereof and having a weight average molecular weight of from 100 to 50,000 to react with each other, wherein
from 4 to 50 % by mole of a hydroxyl group which the polyvinyl acetal has formed a graft bond with the polyester, wherein the hydroxyl group of the polyvinyl acetal forms a graft with the terminal carboxyl group of the polyester:

[Ka 1]

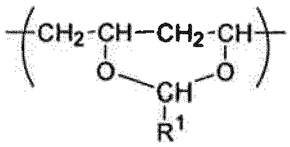 (1)

wherein $R^1$ represents a hydrogen atom, a linear or branched alkyl group having a carbon number of from 1 to 20, or an aryl group, in which the alkyl group or the aryl group may have a substituent, and

[Ka 2]

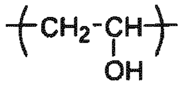 (2)

[Ka 3]

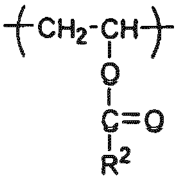 (3)

wherein $R^2$ represents a hydrogen atom, a linear or branched alkyl group having a carbon number of from 1 to 20, or an aryl group, in which the alkyl group or the aryl group may have a substituent, wherein the polyester is obtainable by allowing a hydroxycarboxylic acid and/or a polycondensate thereof and a lactone compound represented by the following general formula (4) to react with each other:

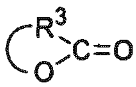 (4)

wherein $R^3$ represents a linear or branched alkylene group having a carbon number of from 2 to 20, and the alkylene group may have a substituent, and the reaction ratio of the hydroxycarboxylic acid to the lactone compound is in the range of from 1/1 to 1/100, and wherein the content of the hydroxyl group is determined as described in the description.

[2] A method for producing a polyvinyl acetal/polyester graft copolymer, characterized by allowing a polyvinyl acetal having one or more of each of constituent units represented by the following general formulae (1) to (3) and having a weight average molecular weight of from 100 to 100,000 and a polyester having a weight average molecular weight of from 100 to 50,000 to react with each other, wherein
from 2 to 50 % by mole of a hydroxyl group which the polyvinyl acetal has formed a bond by an ester exchange reaction with the polyester:

[Ka 7]

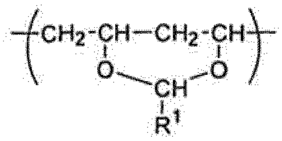

(1)

wherein $R^1$ represents a hydrogen atom, a linear or branched alkyl group having a carbon number of from 1 to 20, or an aryl group, in which the alkyl group or the aryl group may have a substituent, and

[Ka 8]

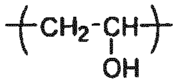

(2)

[Ka 9]

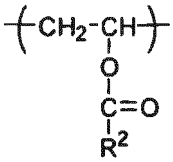

(3)

wherein $R^2$ represents a hydrogen atom, a linear or branched alkyl group having a carbon number of from 1 to 20, or an aryl group, in which the alkyl group or the aryl group may have a substituent, wherein the polyester is obtainable by a ring-opening polymerization reaction of a lactone compound, a polycondensation reaction between a polyvalent carboxylic acid and a polyhydric alcohol, a polycondensation reaction of a hydroxycarboxylic acid, and wherein the content of the hydroxyl group is determined as described in the description.

[3] A dispersant containing the polyvinyl acetal/polyester graft copolymer obtainable by the method according to claim [1] or [2].

[4] A solid particle dispersion having solid particles dispersed in a nonaqueous liquid by the dispersant according to claim [3] or by a dispersant containing a polyvinyl acetal/polyester graft copolymer, which is obtained subjecting a polyvinyl acetal having one or more of each of constituent units represented by the general formulae (1) to (3), as previously described, and having a weight average molecular weight of from 100 to 100, 000 to addition polymerization with a lactone in an amount of from 1 to 50 molar equivalents to a hydroxyl group and wherein in formula (1) $R^1$ represents a hydrogen atom, a linear or branched alkyl group having a carbon number of from 1 to 20, or an aryl group, in which the alkyl group or the aryl group may have a substituent, and in formula (3) $R^2$ represents a hydrogen atom, a linear or branched alkyl group having a carbon number of from 1 to 20, or an aryl group, in which the alkyl group or the aryl group may have a substituent.

ADVANTAGE OF THE INVENTION

The polyvinyl acetal/polyester graft copolymer obtained in the invention becomes a dispersant which in dispersing solid particles in various nonaqueous liquids, prevents aggregation of the solid particles in a dispersion liquid from occurring and is extremely effective for forming a stable dispersion liquid. The present dispersant exhibits excellent dispersibility, fluidity and storage stability and also exhibits excellent compatibility with a dispersion medium. Furthermore, the polyvinyl acetal/polyester graft copolymer obtained in the invention does not have an amine skeleton, and therefore, it also exhibits excellent heat resistance.

MODE FOR CARRYING OUT THE INVENTION

1. Polyvinyl acetal/polyester graft copolymer by reaction with carboxyl group-terminated polyester:

The polyvinyl acetal/polyester graft copolymer obtained in the invention is a reaction product between a polyvinyl acetal and a polyester having at least one carboxyl group, wherein from 4 to 50 % by mole of a hydroxyl group which the polyvinyl acetal has forms a graft bond with the polyester.

The polyvinyl acetal has the constituent units represented by the foregoing general formulae (1) to (3) and is obtained by acetalization of polyvinyl alcohol with an aldehyde. Examples of the aldehyde to be used include formaldehyde, acetaldehyde, propanal, butanal, isobutanal, pentanal, hexanal, heptanal, octanal, nonanal, isononanal, decanal, benzaldehyde, and mixtures thereof.

A weight average molecular weight of the polyvinyl acetal which is used in the invention is from 100 to 100,000, and preferably from 1,000 to 50,000. When the weight average molecular weight is less than 100, a lowering of performance, such as a lowering of dispersibility, etc., is observed, whereas when it is more than 100, 000, the viscosity at the time of use as a dispersant is high so that handling becomes difficult.

The carboxyl group-terminated polyester is obtained by allowing a hydroxycarboxylic acid and/or a polycondensate thereof and a lactone compound represented by the following general formula (4) to react with each other.

[Ka 4]

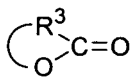 (4)

Here, $R^3$ represents a linear or branched alkylene group having a carbon number of from 2 to 20, and the alkylene group may have a substituent.

As the hydroxycarboxylic acid, aliphatic or aromatic, unsaturated hydroxycarboxylic acids can be used. Examples thereof include ricinoleic acid, ricinolic acid, 12-hydroxystearic acid, castor oil fatty acid, hydrogenated castor oil, δ-hydroxyvaleric acid, lactic acid, glycolic acid, hydroxyisophthalic acid, hydroxypivalic acid, 4-hydroxyisophthalic acid, salicylic acid, 11-hydroxyhexadodecanoic acid, 2-hydroxydodecanoic acid, 2,2-dimethylolpropionic acid, 2,2-dimethylolbutyric acid, 2,2-dimethylolvaleric acid, 2,2-dimethylolpentanoic acid, malic acid, tartaric acid, gluconic acid, 4,4-bis(hydroxyphenyl)butyric acid, glucronic acid, 3-hydroxybutanoic acid, and mixtures thereof.

Examples of the lactone compound include ε-caprolactone, δ-valerolactone, β-methyl-δ-valerolactone, β-propiolactone, γ-butyrolactone, 2-methylcaprolactone, 4-methylcaprolactone, nonalactone, and mixtures thereof.

A reaction ratio of the hydroxycarboxylic acid to the lactone compound is in the range of from 1/1 to 1/100, and preferably from 1/5 to 1/50 in terms of a molar ratio.

A weight average molecular weight of the polyester which is used in the invention is in the range of from 100 to 50, 000, and preferably from 1,000 to 10,000. When the weight average molecular weight is less than 100, a lowering of performance, such as a lowering of dispersibility, etc., is observed, whereas when it is more than 50, 000, the viscosity at the time of use as a dispersant is high so that handling becomes difficult.

The synthesis of a polyester from the foregoing hydroxycarboxylic acid and/or condensate thereof and the lactone compound can be carried out at a temperature in the range of from 100 °C to 220 °C, and preferably from 140 °C to 210 °C. On that occasion, as an esterification catalyst, organic tin compounds such as tin octylate, dibutyltin oxide, dibutyltin laurate, monobutyltin hydroxybutyl oxide, dioctyltin neodecanate, etc.; tin compounds such as stannous oxide, stannous chloride, etc.; titanium compounds such as tetrabutyl titanate, tetraethyl titanate, tetrapropyl titanate, etc.; and other known esterification catalysts can be utilized. A use amount of the catalyst is from 0.1 ppm to 1, 000 ppm, and preferably from 1 ppm to 100 ppm. Also, in order to prevent coloration from occurring, the reaction is preferably carried out in an insert gas atmosphere such as nitrogen, etc.

The polyvinyl acetal/polyester graft copolymer obtained in the invention is obtained due to the matter that when the polyvinyl acetal and the carboxyl group-terminated polyester are allowed to react with each other, the hydroxyl group which the polyvinyl acetal has and the terminal carboxyl group which the polyester has form a graft bond. The hydroxyl group which the polyvinyl acetal has forms a graft bond in an amount in the range of from 4 to 50 % by mole with the polyester.

A rate of reaction of the carboxyl group-containing polyester relative to the polyvinyl acetal is preferably from 20 to 100 % by weight, and the unreacted polyester may remain.

Taking the use of the polyvinyl acetal/polyester graft copolymer obtained in the invention as a dispersant into consideration, a weight average molecular weight thereof is preferably from 5,000 to 500,000.

2. Polyvinyl acetal/polyester graft copolymer by addition polymerization with lactone:

The second polyvinyl acetal/polyester graft copolymer obtained in the invention is a polyvinyl acetal/polylactone graft copolymer obtained by subjecting a polyvinyl acetal having a weight average molecular weight of from 100 to 100,000 to addition polymerization with a lactone in an amount of from 1 to 50 molar equivalents to a hydroxyl group which this polyvinyl acetal has.

As described above, the polyvinyl acetal which is used in the invention has one or more of the constituent units represented by the general formulae (1) to (3) and is obtained by acetalization of polyvinyl alcohol with an aldehyde.

Next, examples of the lactone compound which is used in the invention include ε-caprolactone, 8-valerolactone, β-methyl-δ-valerolactone, β-propiolactone, γ-butyrolactone, 2-methylcaprolactone, 4-methylcaprolactone, nonalactone, and mixtures thereof.

As for a reaction ratio of the polyvinyl acetal and the lactone compound, a proportion of the lactone compound is in the range of from 1 to 50 molar equivalents, and preferably from 1 to 20 molar equivalents per mole of the hydroxyl group of the polyvinyl acetal. When the proportion of the lactone compound is less than 1 molar equivalent, a desirable dispersion performance is not obtained, whereas when it is more than 50 molar equivalents, the viscosity at the time of use as a dispersant is high so that handling becomes difficult.

The reaction between the polyvinyl acetal and the lactone compound can be carried out at a temperature in the range of from 100 °C to 220 °C, and preferably from 140 °C to 210 °C. On that occasion, as an esterification catalyst, organic tin compounds such as tin octylate, dibutyltin oxide, dibutyltin laurate, monobutyltin hydroxybutyl oxide, dioctyltin neodecanate, etc.; tin compounds such as stannous oxide, stannous chloride, etc. ; titanium compounds such as tetrabutyl titanate, tetraethyl titanate, tetrapropyl titanate, etc.; and other known esterification catalysts can be utilized. A use amount of the catalyst is usually in the range of from 0.001 to 1 part by weight, and preferably from 0.01 to 0.5 parts by weight based on 100 parts by weight of a total sum of the polyvinyl acetal and the lactone compound. Also, in order to prevent coloration from occurring, the reaction is preferably carried out in an insert gas atmosphere such as nitrogen, etc.

Taking the use of the polyvinyl acetal/polyester graft copolymer obtained in the invention as a dispersant into consideration, a weight average molecular weight thereof is preferably in the range of from 1,000 to 5,000,000, and more preferably from 10,000 to 1,000,000.

3. Polyvinyl acetal/polyester graft copolymer by ester exchange reaction with polyester:

The polyvinyl acetal/polyester graft copolymer obtained in the invention is a reaction product between a polyvinyl acetal and a polyester and is one in which from 1 to 95 % by mole of a hydroxyl group which the polyvinyl acetal has forms a bond by an ester exchange reaction with the polyester.

As described above, the polyvinyl acetal which is used in the invention has the constituent units represented by the general formulae (1) to (3) and is obtained by acetalization of polyvinyl alcohol with an aldehyde.

The polyester which is used in the invention is obtained by a ring-opening polymerization reaction of a lactone compound, a polycondensation reaction between a polyvalent carboxylic acid and a polyhydric alcohol, a polycondensation reaction of a hydroxycarboxylic acid.

Examples of the lactone compound include ε-caprolactone, 8-valerolactone, β-methyl-δ-valerolactone, β-propiolactone, γ-butyrolactone, 2-methylcaprolactone, 4-methylcaprolactone, nonalactone, and mixtures thereof.

The ring-opening polymerization reaction of the lactone compound can be carried out by known methods. For example, the lactone compound can be subjected to ring-opening polymerization by using an alcohol or amine-containing compound as an initiator.

As the alcohol which is used for the initiator, aliphatic monoalcohols such as methanol, ethanol, 1-propanol, isopropanol, 1-butanol, isobutanol, tert-butanol, 1-pentanol, isopentanol, 1-hexanol, cyclohexanol, 4-methylpentanol, 1-heptanol, 1-octanol, isooctanol, 2-ethylhexanol, 1-nonanol, isononanol, 1-decanol, 1-dodecanol, 1-myristyl alcohol, cetyl alcohol, 1-stearyl alcohol, isostearyl alcohol, oleyl alcohol, 2-octyl decanol, 2-octyl dodecanol, 2-hexyl decanol, behenyl alcohol, etc.; aromatic monoalcohols such as benzyl alcohol, phenylethyl alcohol, etc.; hydroxyl group-containing (meth)acrylic acid esters such as 2-hydroxyethyl acrylate, 2-hydroxyethyl methacrylate, etc.; alkylene glycol monoalkyl ethers such as ethylene glycol monomethyl ether, ethylene glycol monoethyl ether, ethylene glycol monopropyl ether, ethylene glycol monobutyl ether, ethylene glycol monohexyl ether, ethylene glycol mono-2-ethylhexyl ether, propylene glycol monomethyl ether, propylene glycol monoethyl ether, propylene glycol monopropyl ether, propylene glycol monobutyl ether, propylene glycol monohexyl ether, propylene glycol mono-2-ethylhexyl ether, diethylene glycol monomethyl ether, diethylene glycol monoethyl ether, diethylene glycol monopropyl ether, diethylene glycol monobutyl ether, diethylene glycol monohexyl ether, diethylene glycol mono-2-ethylhexyl ether, dipropylene glycol monomethyl ether, dipropylene glycol monoethyl ether, dipropylene glycol monopropyl ether, dipropylene glycol monobutyl ether, dipropylene glycol monohexyl ether, dipropylene glycol mono-2-ethylhexyl ether, triethylene glycol monomethyl ether, triethylene

glycol monoethyl ether, triethylene glycol monopropyl ether, triethylene glycol monobutyl ether, triethylene glycol monohexyl ether, triethylene glycol mono-2-ethylhexyl ether, tripropylene glycol monomethyl ether, tripropylene glycol monoethyl ether, tripropylene glycol monopropyl ether, tripropylene glycol monobutyl ether, tripropylene glycol monohexyl ether, tripropylene glycol mono-2-ethylhexyl ether, tetraethylene glycol monomethyl ether, tetraethylene glycol monoethyl ether, tetraethylene glycol monopropyl ether, tetraethylene glycol monobutyl ether, tetraethylene glycol monohexyl ether, tetraethylene glycol mono-2-ethylhexyl ether, tetrapropylene glycol monomethyl ether, tetrapropylene glycol monoethyl ether, tetrapropylene glycol monopropyl ether, tetrapropylene glycol monobutyl ether, tetrapropylene glycol monohexyl ether, tetrapropylene glycol mono-2-ethylhexyl ether, tetradiethylene glycol monomethyl ether, etc.; dihydric alcohols such as ethylene glycol, 1,2-propylene glycol, 1,3-propylene glycol, 1,2-butanediol, 1,3-butanediol, 1,4-butanediol, 2-methyl-1,3-propanediol, 1,6-hexanediol, 1,10-decanediol, diethylene glycol, triethylene glycol, tetraethylene glycol, pentaethylene glycol, dipropylene glycol, tripropylene glycol, tetrapropylene glycol, 1,4-cyclohexanedimethanol, 1,4-benzenedimethanol,
2,2-bis-(4-hydroxyethoxyphenyl)propane,
1,4-bis(2-hydroxyethyl)benzene,
1,6-bis(2-hydroxyethoxy)hexane, etc.; and polyhydric alcohols such as butanediol, neopentyl glycol, 1,4-hexanediol, glycerin, trimethylolethane, trimethylolpropane, tris(2-hydroxyethyl)isocyanurate, pentaerythritol, ditrimethylolpropane, dipentaerythritol, mannitol, sorbitol, etc. can be used.

Examples of the amine which is used for the initiator include methylamine, dimethylamine, ethylamine, diethylamine, triethylamine, methylethylamine, propylamine, dipropylamine, cyclohexylamine, phenylamine, benzylamine, pyrrolidine, morpholine, methylenediamine, ethylenediamine, tetraethylenediamine, hexaethylenediamine, propylenediamine, diphenyldiaminomethane, p-phenylenediamine, hexamethylenediamine, isophorone diamine, ethanolamine, diethylenetriamine, diethylaminopropylamine, piperazine, triethylenetetramine, and so on.

The ring-opening polymerization reaction of the lactone compound is advanced by adding the initiator and a catalyst to the lactone compound and heating. A reaction temperature is usually in the range of from 100 °C to 220 °C, and preferably from 140 °C to 210 °C. As the catalyst, organic tin compounds such as tin octylate, dibutyltin oxide, dibutyltin laurate, monobutyltin hydroxybutyl oxide, dioctyltin neodecanate, etc. ; tin compounds such as stannous oxide, stannous chloride, etc.; titanium compounds such as tetrabutyl titanate, tetraethyl titanate, tetrapropyl titanate, etc.; and other known esterification catalysts can be utilized. A use amount of the catalyst is preferably from 0.1 ppm to 1,000 ppm, and more preferably from 1 ppm to 100 ppm. Also, in order to prevent coloration from occurring, the reaction is preferably carried out in an insert gas atmosphere such as nitrogen, etc.

As a ring-opening polymerization product of the lactone compound, a commercially available polylactone polyol may also be used. For example, "PLACCEL" Series, manufactured by Daicel Corporation can be used.

The polyester which is used in the invention can also be obtained by a polycondensation reaction between a polyvalent carboxylic acid and a polyhydric alcohol.

Examples of the polyvalent carboxylic acid include phthalic acid, isophthalic acid, terephthalic acid, 2,6-naphthalenedicarboxylic acid, succinic acid, glutaric acid, adipic acid, sebacic acid, maleic acid, fumaric acid, tetrahydrophthalic acid, hexahydrophthalic acid, trimellitic acid, pyromellitic acid, and so on.

Examples of the polyhydric alcohol include ethylene glycol, 1,2-propylene glycol, 1,3-propylene glycol, 1,2-butanediol, 1,3-butanediol, 1,4-butanediol, 2-methyl-1,3-propanediol, 1,6-hexanediol, 1,10-decanediol, diethylene glycol, triethylene glycol, tetraethylene glycol, pentaethylene glycol, dipropylene glycol, tripropylene glycol, tetrapropylene glycol, 1,4-cyclohexanedimethanol, 1,4-benzenedimethanol,
2,2-bis-(4-hydroxyethoxyphenyl)propane,
1,4-bis(2-hydroxyethyl)benzene,
1,6-bis(2-hydroxyethoxy)hexane, butanediol, neopentyl glycol, 1,4-hexanediol, glycerin, trimethylolethane, trimethylolpropane, tris(2-hydroxyethyl)isocyanurate, pentaerythritol, ditrimethylolpropane, dipentaerythritol, mannitol, sorbitol, and so on.

The polycondensation reaction between the polyvalent carboxylic acid and the polyhydric alcohol can be carried out by adding a catalyst and heating. A reaction temperature is in the range of from 100 °C to 220 °C, and preferably from 140 °C to 210 °C. As the catalyst, organic tin compounds such as tin octylate, dibutyltin oxide, dibutyltin laurate, monobutyltin hydroxybutyl oxide, dioctyltin neodecanate, etc. ; tin compounds such as stannous oxide, stannous chloride, etc.; titanium compounds such as tetrabutyl titanate, tetraethyl titanate, tetrapropyl titanate, etc.; and other known esterification catalysts can be utilized. A use amount of the catalyst is from 0.1 ppm to 1,000 ppm, and preferably from 1 ppm to 100 ppm. Also, in order to prevent coloration from occurring, the reaction is preferably carried out in an insert gas atmosphere such as nitrogen, etc.

The polyester which is used in the invention can be obtained by a polycondensation reaction of a hydroxycarboxylic acid.

As the hydroxycarboxylic acid, aliphatic or aromatic, unsaturated hydroxycarboxylic acids can be used. Examples thereof include ricinoleic acid, ricinolic acid, 12-hydroxystearic acid, castor oil fatty acid, hydrogenated castor oil,

δ-hydroxyvaleric acid, lactic acid, glycolic acid, hydroxyisophthalic acid, hydroxypivalic acid, 4-hydroxyisophthalic acid, salicylic acid, 11-hydroxyhexadodecanoic acid, 2-hydroxydodecanoic acid, 2,2-dimethylolpropionic acid, 2,2-dimethylolbutyric acid, 2,2-dimethylolvaleric acid, 2,2-dimethylolpentanoic acid, malic acid, tartaric acid, gluconic acid, 4,4-bis(hydroxyphenyl)butyric acid, glucronic acid, 3-hydroxybutanoic acid, and mixtures thereof.

The polycondensation reaction of the hydroxycarboxylic acid can be carried out by adding a catalyst and heating. A reaction temperature is in the range of from 100 °C to 220 °C, and preferably from 140 °C to 210 °C. As the catalyst, organic tin compounds such as tin octylate, dibutyltin oxide, dibutyltin laurate, monobutyltin hydroxybutyl oxide, dioctyltin neodecanate, etc.; tin compounds such as stannous oxide, stannous chloride, etc.; titanium compounds such as tetrabutyl titanate, tetraethyl titanate, tetrapropyl titanate, etc.; and other known esterification catalysts can be utilized. A use amount of the catalyst is preferably from 0.1 ppm to 1,000 ppm, and more preferably from 1 ppm to 100 ppm. Also, in order to prevent coloration from occurring, the reaction is preferably carried out in an insert gas atmosphere such as nitrogen, etc.

A weight average molecular weight of the polyester which is used in the invention is preferably in the range of from 100 to 50, 000, and more preferably from 1, 000 to 10, 000. When the weight average molecular weight is less than 100, a lowering of performance, such as a lowering of dispersibility, etc., is observed, whereas when it is more than 50, 000, the viscosity at the time of use as a dispersant is high so that handling becomes difficult.

The polyvinyl acetal/polyester graft copolymer obtained in the invention can be obtained by an ester exchange reaction between the polyvinyl acetal and the polyester.

The ester exchange reaction can be carried out according to a known method. The reaction is carried out usually at a temperature of from 80 °C to 280 °C, and preferably from 140 °C to 250 °C and usually for from 0.5 to 12 hours, and preferably 4 to 8 hours, and a catalyst may be used. Examples of the catalyst include organic tin compounds such as tin octylate, dibutyltin oxide, dibutyltin laurate, monobutyltin hydroxybutyl oxide, dioctyltin neodecanate, etc.; tin compounds such as stannous oxide, stannous chloride, etc.; titanium compounds such as tetrabutyl titanate, tetraethyl titanate, tetrapropyl titanate, etc.; protonic acids such as phosphoric acid, boric acid, sulfuric acid, p-toluenesulfonic acid, methanesulfonic acid, etc.; alkali metal compounds such as potassium hydroxide, sodium hydroxide, sodium methoxide, etc.; and so on. Also, in order to prevent coloration from occurring, the reaction is preferably carried out in an insert gas atmosphere such as nitrogen, etc.

In the polyvinyl acetal/polyester graft copolymer obtained in the invention, when the polyvinyl acetal and the polyester are allowed to react with each other, a part of the hydroxyl group which the polyvinyl acetal has undergoes ester exchange with the polyester, thereby forming a graft bond. The hydroxyl group which the polyvinyl acetal has forms a graft bond in an amount in the range of from 2 to 50 % by mole with the polyester.

In all of the cases, the unreacted polyester may remain.

Taking the use of the polyvinyl acetal/polyester graft copolymer obtained in the invention as a dispersant into consideration, a weight average molecular weight thereof is preferably from 5,000 to 500,000.

4. Use as dispersant:

The polyvinyl acetal/polyester graft copolymer obtained in the invention can be suitably used as a dispersant and is effective for both inorganic and organic solid particles. Specifically, it enables solid particles to be stably dispersed in a high concentration and a low viscosity in a dispersion medium which is usually used in various fields of paints, printing inks, toners for electrostatic copying, plastics, pigment printing agents, inks for inkjet printing, inks for thermal transfer recording, resists for color filter, inks for writing, etc.

Though the solid particles to be dispersed by the polyvinyl acetal/polyester graft copolymer obtained in the invention are not particularly limited, examples of inorganic particles include kaolin, aluminum silicate, clay, talc, mica, calcium silicate, bentonite, magnesium silicate, asbestos, calcium carbonate, magnesium carbonate, barium carbonate, dolomite, calcium sulfate, barium sulfate, aluminum sulfate, zirconia, magnesia, alumina, antimony trioxide, titanium oxide, diatomaceous earth, iron oxide, zinc oxide, aluminum hydroxide, iron hydroxide, silicon carbide, silicon nitride, boron nitride, barium titanate, carbon black, graphite, an iron powder, a silver powder, an aluminum powder, a copper powder, a nickel powder, a gold powder, and so on. Examples of organic particles include organic pigments such as azo series, diazo series, condensed azo series, thio indigo series, indanthrone series, quinacridone series, anthraquinone series, benzoimidazolone series, perylene series, phthalocyanine series, anthrapyridine series, dioxazine series, etc., starch, a polyethylene resin, a urethane resin, a melamine resin, a polystyrene resin, polylactic acid, solid paraffin, and so on.

Examples of the dispersion medium include aromatic hydrocarbon based solvents such as toluene, xylene, etc.; hydrocarbon based solvents such as n-hexane, cyclohexane, n-heptane, etc.; halogenated hydrocarbon based solvents such as methylene chloride, chloroform, dichloroethane, etc.; ether based solvents such as dioxane, tetrahydrofuran, butyl ether, butyl ethyl ether, diglyme, etc.; ketone based solvents such as methyl isobutyl ketone, cyclohexanone, isophorone, etc. ; ester based solvents such as ethyl acetate, butyl acetate, ethylene glycol monoethyl ether

acetate, propylene glycol monomethyl ether acetate, etc.; alcohol based solvents such as methyl alcohol, ethyl alcohol, n-propyl alcohol, isopropyl alcohol, n-butyl alcohol, isobutyl alcohol, t-butyl alcohol, amyl alcohol, n-hexyl alcohol, n-heptyl alcohol, 2-ethylhexyl alcohol, lauryl alcohol, stearyl alcohol, cyclopentanol, cyclohexanol, benzyl alcohol, p-t-butyl benzyl alcohol, etc.; and monoether based solvents of an alkylene glycol such as ethylene glycol monomethyl ether, ethylene glycol monoethyl ether, ethylene glycol monobutyl ether, propylene glycol monomethyl ether, propylene glycol monoethyl ether, propylene glycol monobutyl ether, etc.; and besides, amide based solvents such as dimethylacetamide, dimethylformamide, etc. These can be properly used alone or in admixture of two or more kinds thereof.

In the case of using the polyvinyl acetal/polyester graft copolymer obtained in the invention as a dispersant, a use amount thereof is usually from about 1 to 300 % by weight relative to the solid particles.

A dispersion method is not particularly limited, and the dispersion can be carried out by a known method using a pulverizer such as a ball mill, a bead mill, a sand mill, etc.

EXAMPLES

The invention is hereunder specifically described with reference to the Examples.

Incidentally, in the following description, the term "parts" expresses "parts by weight", and the term "%" expresses "% by weight".

1. Examples of polyvinyl acetal/polyether graft copolymer obtained by reaction with carboxyl group-terminated polyester:

[Production Example 1-1: Synthesis of polyester]

In a reactor equipped with a nitrogen-introducing tube, a thermometer, and a reflux condenser, 50.0 parts of 12-hydroxystearic acid, 800.0 parts of ε-caprolactone, and 0 - 1 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 7,100 and an acid value of 7.9 mgKOH/g.

[Production Example 1-2: Synthesis of polyester]

In a reactor equipped with a nitrogen-introducing tube, a thermometer, and a reflux condenser, 100.0 parts of 12-hydroxystearic acid, 800.0 parts of ε-caprolactone, and 0.1 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 3,500 and an acid value of 16.0 mgKOH/g.

[Production Example 1-3: Synthesis of polyester]

In a reactor equipped with a nitrogen-introducing tube, a thermometer, and a reflux condenser, 100.0 parts of 12-hydroxystearic acid, 400.0 parts of ε-caprolactone, and 0.05 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 2,300 and an acid value of 24.4 mgKOH/g.

[Production Example 1-4: Synthesis of polyester]

In a reactor equipped with a nitrogen-introducing tube, a thermometer, and a reflux condenser, 100.0 parts of 2,2-dimethylolpropionic acid, 850.0 parts of ε-caprolactone, and 0.05 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 2,000 and an acid value of 29.5 mgKOH/g.

[Production Example 1-5: Synthesis of polyester]

In a reactor equipped with a nitrogen-introducing tube, a thermometer, and a reflux condenser, 87.0 parts of a 12-hydroxystearic acid condensate ("PHF-33", manufactured by Itoh Oil Chemicals Co., Ltd.), 46.0 parts of ε-caprolactone, and 0.05 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 3,000 and an acid value of 18.6 mgKOH/g.

[Production Example 1-6: Synthesis of polyvinyl acetal/polyester graft copolymer]

In a reactor equipped with a nitrogen-introducing tube, a thermometer, a reflux condenser, and a water measuring tube, 4.1 parts of polyvinyl acetal (a trade name: "S-LEC BX-L", manufactured by Sekisui Chemical Co., Ltd.; weight average molecular weight: about 20,000, hydroxyl group: 37 ± 3 % by mole, acetyl group: not more than 3 % by mole, degree of acetalization: about 61 % by mole), 129.0 parts (50 % by mole relative to the hydroxyl group) of the polyester of Production Example 1-1, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 95, 000, a rate of reaction of 41 %, an acid value of 3.3 mgKOH/g, and a rate of hydroxyl group consumption of 21 % by mole.

[Production Example 1-7: Synthesis of polyvinyl butyral/polyester graft copolymer]

In a reactor equipped with a nitrogen-introducing tube, a thermometer, a reflux condenser, and a water measuring tube, 4.1 parts of polyvinyl butyral (a trade name: "S-LEC BL-1", manufactured by Sekisui Chemical Co., Ltd.; weight average molecular weight: about 19,000, hydroxyl group: about 36 % by mole, acetyl group: not more than 3 % by mole, degree of butyralization: about 63 ± 3 % by mole), 64.5 parts (50 % by mole relative to the hydroxyl group) of the polyester of Production Example 1-2, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 70, 000, a rate of reaction of 26 %, an acid value of 6.5 mgKOH/g, and a rate of hydroxyl group consumption of 13 % by mole.

[Production Example 1-8: Synthesis of polyvinyl acetal/polyester graft copolymer]

In a reactor equipped with a nitrogen-introducing tube, a thermometer, a reflux condenser, and a water measuring tube, 4.1 parts of polyvinyl acetal (a trade name: "S-LEC BX-L", manufactured by Sekisui Chemical Co., Ltd.; weight average molecular weight: about 20,000, hydroxyl group: 37 ± 3 % by mole, acetyl group: not more than 3 % by mole, degree of acetalization: about 61 % by mole), 64.5 parts (50 % by mole relative to the hydroxyl group) of the polyester of Production Example 1-2, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 55, 000, a rate of reaction of 50 %, an acid value of 5.1 mgKOH/g, and a rate of hydroxyl group consumption of 25 % by mole.

[Production Example 1-9: Synthesis of polyvinyl butyral/polyester graft copolymer]

In a reactor equipped with a nitrogen-introducing tube, a thermometer, a reflux condenser, and a water measuring tube, 32.6 parts of polyvinyl butyral (a trade name: "S-LEC BL-1", manufactured by Sekisui Chemical Co., Ltd.; weight average molecular weight: about 19, 000, hydroxyl group: about 36 % by mole, acetyl group: not more than 3 % by mole, degree of butyralization: about 63 ± 3 % by mole), 64.5 parts (8 % by mole relative to the hydroxyl group) of the polyester of Production Example 1-2, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 55, 000, a rate of reaction of 42 %, an acid value of 6.1 mgKOH/g, and a rate of hydroxyl group consumption of 3.4 % by mole.

[Production Example 1-10: Synthesis of polyvinyl butyral/polyester graft copolymer]

In a reactor equipped with a nitrogen-introducing tube, a thermometer, a reflux condenser, and a water measuring tube, 8.2 parts of polyvinyl butyral (a trade name: "S-LEC BL-1", manufactured by Sekisui Chemical Co., Ltd.; weight

average molecular weight: about 19,000, hydroxyl group: about 36 % by mole, acetyl group: not more than 3 % by mole, degree of butyralization: about 63 ± 3 % by mole), 77.9 parts (25 % by mole relative to the hydroxyl group) of the polyester of Production Example 1-3, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 45, 000, a rate of reaction of 60 %, an acid value of 10.1 mgKOH/g, and a rate of hydroxyl group consumption of 15 % by mole.

[Production Example 1-11: Synthesis of polyvinyl acetal/polyester graft copolymer]

In a reactor equipped with a nitrogen-introducing tube, a thermometer, a reflux condenser, and a water measuring tube, 12.3 parts of polyvinyl acetal (a trade name: "S-LEC BX-L", manufactured by Sekisui Chemical Co., Ltd.; weight average molecular weight: about 20,000, hydroxyl group: 37 ± 3 % by mole, acetyl group: not more than 3 % by mole, degree of acetalization: about 61 % by mole), 64.2 parts (50 % by mole relative to the hydroxyl group) of the polyester of Production Example 1-4, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 50, 000, a rate of reaction of 61 %, an acid value of 11.8 mgKOH/g, and a rate of hydroxyl group consumption of 30.5 % by mole.

[Production Example 1-12: Synthesis of polyvinyl butyral/polyester graft copolymer]

In a reactor equipped with a nitrogen-introducing tube, a thermometer, a reflux condenser, and a water measuring tube, 14.0 parts of polyvinyl butyral (a trade name: "S-LEC BL-1", manufactured by Sekisui Chemical Co., Ltd.; weight average molecular weight: about 19, 000, hydroxyl group: about 36 % by mole, acetyl group: not more than 3 % by mole, degree of butyralization: about 63 ± 3 % by mole), 61.4 parts (20 % by mole relative to the hydroxyl group) of the polyester of Production Example 1-5, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 54, 000, a rate of reaction of 25 %, an acid value of 15.1 mgKOH/g, and a rate of hydroxyl group consumption of 5.0 % by mole.

[Comparative Production Example 1-1: Synthesis of polyethyleneimine/polyester graft copolymer]

In a reactor equipped with a nitrogen-introducing tube, a thermometer, a reflux condenser, and a water measuring tube, 8.1 parts of polyethyleneimine (a trade name: "LUPASOL PR8515", weight average molecular weight: 2,000), 91.9 parts of the polyester of Production Example 1-1, and 0.05 parts of tetrabutyl titanate were charged, the temperature was elevated to 200 °C in a nitrogen atmosphere, and heating was carried out for 6 hours.

The reaction product was a brown solid and had an amine value of 45.5 mgKOH/g and an acid value of 1.1 mgKOH/g.

<Molecular weight of polyvinyl acetal/polyester graft copolymer>

The average molecular weight of the polyvinyl acetal/polyester graft copolymer was measured by means of gel permeation chromatography (GPC) using tetrahydrofuran as a solvent.

<Measurement of rate of hydroxyl group consumption>

The rate of hydroxyl group consumption of the polyvinyl acetal/polyester graft copolymer was determined according to the following expression.

Rate of hydroxyl group consumption (%) = (a x b)/100

a: Ratio of charged polyester (% by mole relative to hydroxyl group)
b: Rate of reaction between polyvinyl acetal and polyester (%)

<Heat resistance test>

A heat resistance test of each of the polyvinyl acetal/polyester graft copolymers obtained in the foregoing

Production Examples 1-6 to 1-12 and Comparative Production Example 1-1 was carried out in the following manner. Results are shown in Table 1.

Color difference:

0.5 mg of the dispersant was dissolved in 20 mL of methylene chloride and mixed with 10 g of a silica gel, and the mixture was dried at room temperature. A half amount of the obtained silica gel was heat treated at 200 °C for one hour, and a color difference before and after the treatment was measured.

Heat resistance:

The heat resistance was decided on the basis of the color difference according to the following criteria.
A: The color difference (ΔE) is from 0 to 5.
B: The color difference (ΔE) is more than 5 and less than 10.
C: The color difference (ΔE) is 10 or more.

Table 1

| | Dispersant | Color difference (ΔE) | Heat difference |
|---|---|---|---|
| Product obtained according to the invention | Production Example 1-6 | 2.9 | A |
| | Production Example 1-7 | 3.2 | A |
| | Production Example 1-8 | 3.0 | A |
| | Production Example 1-9 | 2.7 | A |
| | Production Example 1-10 | 3.6 | A |
| | Production Example 1-11 | 3.1 | A |
| | Production Example 1-12 | 3.0 | A |
| Comparative product | Comparative Production Example 1-1 | 16.4 | C |
| | Dispersant *1 | 12.5 | C |
| | Dispersant *2 | 13.1 | C |

Incidentally, details of the dispersants which are targets for comparison other than that of Comparative Production Example 1-1 are as follows.

*1: A trade name: "AJISPER PB-822", manufactured by Ajinomoto Fine-Techno Co., Inc., dispersant for a polymer based pigment; amine value: 17 mgKOH/g, acid value: 14 mgKOH/g
*2: A trade name: "S-LEC BL-1", manufactured by Sekisui Chemical Co., Ltd., polyvinyl butyral; weight average molecular weight: about 19,000, hydroxyl group: about 36 % by mole, acetyl group: not more than 3 % by mole, degree of butyralization: about 63 ± 3 % by mole

<Dispersibility test>

Each of the polyvinyl acetal/polyester graft polymers obtained in the foregoing Production Examples and the dispersants as targets for comparison was dissolved in a dispersion medium shown in Table 2, to which were then added solid particles shown in Table 2, and the mixture was stirred in a ball mill for 24 hours, thereby preparing a solid particle dispersion. Dispersibility at the time of completion of stirring was visually observed and evaluated according to the following criteria. Results are shown in Table 2.

A: All of the solid particles are dispersed in the liquid, and precipitation does not occur in the bottom at all.
B: Though almost all of the solid particles are dispersed in the liquid, precipitation slightly occurs in the bottom.
C: About a half of the solid particles precipitate in the liquid.
D: Almost all of the solid particles precipitate in the bottom.

<Test of coating film state>

To 10.0 parts of the dispersion after the dispersibility test, 0.4 parts of an acrylic resin (a trade name: "ACRYPET MD", manufactured by Mitsubishi Rayon Co. , Ltd.) was added and dissolved with stirring. The obtained mixed liquid was subjected to flow coating on a slide glass and dried in an oven at 120 °C for one hour. The obtained coating film was visually observed and evaluated according to the following criteria. Results are shown in Table 2.

A: The obtained coating film is transparent.

B: The obtained coating film is cloudy.

C: The solid particles aggregate, and the obtained coating film is not transparent.

Table 2

| | | Dispersant | | Solid particle | | Solvent | | Dispersibility | Coating film state |
|---|---|---|---|---|---|---|---|---|---|
| | | Type | Ratio (%) | Type | Ratio (%) | Type | Ratio (%) | | |
| Example | 1-1 | Production Example 1-6 | 1.2 | Pigment Blue 15:6 | 4.1 | PGMEA | 94.7 | A | A |
| | 1-2 | Production Example 1-7 | 1.2 | Pigment Blue 15:6 | 4.1 | PGMEA | 94.7 | A | A |
| | 1-3 | Production Example 1-8 | 1.2 | Pigment Blue 15:6 | 4.1 | PGMEA | 94.7 | A | A |
| | 1-4 | Production Example 1-9 | 1.2 | Pigment Blue 15:6 | 4.1 | PGMEA | 94.7 | A | A |
| | 1-5 | Production Example 1-10 | 1.2 | Pigment Blue 15:6 | 4.1 | PGMEA | 94.7 | A | A |
| | 1-6 | Production Example 1-11 | 1.2 | Pigment Blue 15:6 | 4.1 | PGMEA | 94.7 | A | A |
| | 1-7 | Production Example 1-12 | 1.2 | Pigment Blue 15:6 | 4.1 | PGMEA | 94.7 | A | A |
| | 1-8 | Production Example 1-6 | 1.2 | Pigment Blue 15:6 | 4.1 | Toluene | 94.7 | A | A |
| | 1-9 | Production Example 1-6 | 1.2 | Pigment Blue 15:6 | 4.1 | Butyl cellosolve | 94.7 | A | A |
| | 1-10 | Production Example 1-6 | 1.2 | Pigment Blue 15:6 | 4.1 | Methyl ethyl ketone | 94.7 | A | A |
| | 1-11 | Production Example 1-6 | 1.2 | Pigment Red 177 | 4.1 | PGMEA | 94.7 | A | A |
| | 1-12 | Production Example 1-6 | 1.2 | Pigment Red 254 | 4.1 | PGMEA | 94.7 | A | A |
| | 1-13 | Production Example 1-6 | 1.2 | Zirconia | 4.1 | PGMEA | 94.7 | A | A |
| | 1-14 | Production Example 1-6 | 1.2 | Magnesium oxide | 4.1 | PGMEA | 94.7 | A | A |
| | 1-15 | Production Example 1-6 | 1.2 | Talc | 4.1 | PGMEA | 94.7 | A | A |
| | 1-16 | Production Example 1-6 | 1.2 | Potassium carbonate | 4.1 | PGMEA | 94.7 | A | A |
| Comparative Example | 1-1 | Production Example 1-1 | 1.2 | Pigment Blue 15:6 | 4.1 | PGMEA | 94.7 | D | C |
| | 1-2 | Comparative Production Example 1-1 | 1.2 | Pigment Blue 15:6 | 4.1 | PGMEA | 94.7 | B | B |
| | 1-3 | Dispersant *1 | 1.2 | Pigment Blue 15:6 | 4.1 | PGMEA | 94.7 | A | A |
| | 1-4 | Dispersant *2 | 1.2 | Pigment Blue 15:6 | 4.1 | PGMEA | 94.7 | C | C |
| PGMEA: Propylene glycol monomethyl ether acetate | | | | | | | | | |

2. Examples of polyvinyl acetal/polyester graft copolymer obtained by addition polymerization with lactone:

[Production Example 2-1]

In a reactor equipped with a nitrogen-introducing tube, a thermometer, and a reflux condenser, 3.0 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (40 molar equivalents to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow solid and had an average molecular weight of 815,000.

[Production Example 2-2]

In a reactor equipped with a nitrogen-introducing tube, a thermometer, and a reflux condenser, 6.1 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (20 molar equivalents to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 416,000.

[Production Example 2-3]

In a reactor equipped with a nitrogen-introducing tube, a thermometer, and a reflux condenser, 12.2 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (10 molar equivalents to the hydroxyl group), and 0. 2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 216,000.

[Production Example 2-4]

In a reactor equipped with a nitrogen-introducing tube, a thermometer, and a reflux condenser, 12.2 parts of polyvinyl acetal (a trade name: "S-LEC BX-L", manufactured by Sekisui Chemical Co., Ltd.; average molecular weight: about 20,000, hydroxyl group: 37 ± 3 % by mole, acetyl group: not more than 3 % by mole, degree of acetalization: about 61% by mole), 114.0 parts of ε-caprolactone (10 molar equivalents to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 203,000.

[Production Example 2-5]

In a reactor equipped with a nitrogen-introducing tube, a thermometer, and a reflux condenser, 24.4 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (5 molar equivalents to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 145,000.

[Production Example 2-6]

In a reactor equipped with a nitrogen-introducing tube, a thermometer, and a reflux condenser, 24.4 parts of polyvinyl acetal (a trade name: "S-LEC BX-L", manufactured by Sekisui Chemical Co., Ltd.; average molecular weight: about 20,000, hydroxyl group: 37 ± 3 % by mole, acetyl group: not more than 3 % by mole, degree of acetalization: about 61% by mole), 114.0 parts of ε-caprolactone (5 molar equivalents to the hydroxyl group), and 0.2 parts of dioctyltin

neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 117,000.

[Production Example 2-7]

In a reactor equipped with a nitrogen-introducing tube, a thermometer, and a reflux condenser, 2.4 parts of polyvinyl acetal (average molecular weight: about 5, 000, hydroxyl group: 36 % by mole, acetyl group: not more than 3 % by mole, degree of acetalization: about 63 % by mole), 114.0 parts of ε-caprolactone (5 molar equivalents to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 35,000.

[Production Example 2-8]

In a reactor equipped with a nitrogen-introducing tube, a thermometer, and a reflux condenser, 48.8 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (2.5 molar equivalents to the hydroxyl group), and 0. 2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 85,000.

[Production Example 2-9]

In a reactor equipped with a nitrogen-introducing tube, a thermometer, and a reflux condenser, 97.6 parts of polyvinyl butyral (a trade name: "S-LEC BL-1", manufactured by Sekisui Chemical Co., Ltd.; average molecular weight: about 19,000, hydroxyl group: about 36 % by mole, acetyl group: not more than 3 % by mole, degree of butyralization: about 63 ± 3 % by mole), 114.0 parts of ε-caprolactone (1 molar equivalent to the hydroxyl group), and 0.2 parts of dioctyltin neodecanate were charged, and heating was carried out at 180 °C in a nitrogen atmosphere until the amount of remaining ε-caprolactone reached not more than 1 %.

The reaction product was a pale yellow viscous liquid and had an average molecular weight of 51,000.

[Comparative Production Example 2-1]

In a reactor equipped with a nitrogen-introducing tube, a thermometer, a reflux condenser, and a water measuring tube, 10.0 parts of polyethyleneimine (a trade name: "LUPASOL PR8515", manufactured by BASF AG; molecular weight: 2,000), 114.0 parts of ε-caprolactone, and 0.2 parts of dioctyltin neodecanate were charged, and heating was carried out at 180 °C in a nitrogen atmosphere until the amount of remaining ε-caprolactone reached not more than 1 %.

The reaction product was a brown solid.

The residual amount of ε-caprolactone and the molecular weight of the polyvinyl acetal/polyester graft copolymer in each of the foregoing Production Examples and Comparative Production Example were measured in the following manners.

<Residual amount of ε-caprolactone>

The residual amount of ε-caprolactone was measured by a gas chromatography internal standard method (internal standard substance: diphenyl ether) using dichloromethane as a solvent.

<Molecular weight of polyvinyl acetal/polyester graft copolymer>

The average molecular weight of the polyvinyl acetal/polyester graft copolymer was measured by means of gel permeation chromatography (GPC) using tetrahydrofuran as a solvent.

<Heat resistance test>

A heat resistance test of each of the polyvinyl acetal/polyester graft copolymers obtained in the foregoing Production Examples 2-1 to 2-9 and Comparative Production Example 2-1 was carried out in the following manner.

Results are shown in Table 3.

Color difference:

0.5 mg of the dispersant was dissolved in 20 mL of methylene chloride and mixed with 10 g of a silica gel, and the mixture was dried at room temperature. A half amount of the obtained silica gel was heat treated at 200 °C for one hour, and a color difference before and after the treatment was measured.

Heat resistance:

The heat resistance was decided according to the following criteria.
A: The color difference (ΔE) is from 0 to 5.
B: The color difference (ΔE) is more than 5 and less than 10.
C: The color difference (ΔE) is 10 or more.

Table 3

| | Dispersant | Color difference (ΔE) | Heat difference |
|---|---|---|---|
| Product obtained according to the invention | Production Example 2-1 | 1.8 | A |
| | Production Example 2-2 | 1.6 | A |
| | Production Example 2-3 | 2.3 | A |
| | Production Example 2-4 | 2.1 | A |
| | Production Example 2-5 | 1.9 | A |
| | Production Example 2-6 | 2.5 | A |
| | Production Example 2-7 | 2.7 | A |
| | Production Example 2-8 | 2.5 | A |
| | Production Example 2-9 | 2.2 | A |
| Comparative product | Comparative Production Example 2-1 | 19.6 | C |
| | Dispersant *1 | 12.5 | C |
| | Dispersant *2 | 13.1 | C |

Incidentally, details of the dispersants which are a standard for comparison other than that of Comparative Production Example 2-1 are as follows.

*1: A trade name: "AJISPER PB-822", manufactured by Ajinomoto Fine-Techno Co., Inc., dispersant for a polymer based pigment; amine value: 17 mgKOH/g, acid value: 14 mgKOH/g,

*2: A trade name: "S-LEC BL-1", manufactured by Sekisui Chemical Co., Ltd. for polyvinyl butyral; average molecular weight: about 19, 000, hydroxyl group: about 36 % by mole, acetyl group: not more than 3 % by mole, degree of butyralization: about 63 ± 3 % by mole

<Dispersibility test>

Each of the polyvinyl acetal/polyester graft polymers obtained in the foregoing Production Examples 2-1 to 2-9 and Comparative Production Example 2-1 and the dispersants as targets for comparison was dissolved in a dispersion medium, to which were then added 4. 3 parts of a fine powder and zirconia beads, and the mixture was stirred in a ball mill for 24 hours. Dispersibility was visually observed and evaluated according to the following criteria. Results are shown in Table 4.

A: All of the powders are dispersed in the liquid, and precipitation does not occur in the bottom at all.

B: Though almost all of the powders are dispersed in the liquid, precipitation slightly occurs in the bottom.
C: About a half of the powders precipitate in the liquid.
D: Almost all of the powders precipitate in the bottom.

<Test of coating film state>

To 10.0 parts of the dispersion after the foregoing dispersibility test, 0.4 parts of an acrylic resin (a trade name: "ACRYPET MD", manufactured by Mitsubishi Rayon Co., Ltd.) was added and dissolved. The solution was subjected to flow coating on a slide glass and dried in an oven at 120 °C for one hour. The obtained coating film was visually observed and evaluated according to the following criteria. Results are shown in Table 4.
A: The obtained coating film is transparent.
B: The obtained coating film is cloudy.
C: The fine particles aggregate, and the obtained coating film is not transparent.

Table 4

| | | Dispersant | | Fine powder | | Solvent | | Dispersibility | Coating film state |
|---|---|---|---|---|---|---|---|---|---|
| | | Type | Ratio (%) | Type | Ratio (%) | Type | Ratio (%) | | |
| Example | 2-1 | Production Example 2-1 | 1.2 | Pigment Blue 15:6 | 4.1 | PGMEA | 94.7 | A | A |
| | 2-2 | Production Example 2-2 | 1.2 | Pigment Blue 15:6 | 4.1 | PGMEA | 94.7 | A | A |
| | 2-3 | Production Example 2-3 | 1.2 | Pigment Blue 15:6 | 4.1 | PGMEA | 94.7 | A | A |
| | 2-4 | Production Example 2-4 | 1.2 | Pigment Blue 15:6 | 4.1 | PGMEA | 94.7 | A | A |
| | 2-5 | Production Example 2-5 | 1.2 | Pigment Blue 15:6 | 4.1 | PGMEA | 94.7 | A | A |
| | 2-6 | Production Example 2-6 | 1.2 | Pigment Blue 15:6 | 4.1 | PGMEA | 94.7 | A | A |
| | 2-7 | Production Example 2-7 | 1.2 | Pigment Blue 15:6 | 4.1 | PGMEA | 94.7 | A | A |
| | 2-8 | Production Example 2-8 | 1.2 | Pigment Blue 15:6 | 4.1 | PGMEA | 94.7 | A | A |
| | 2-9 | Production Example 2-9 | 1.2 | Pigment Blue 15:6 | 4.1 | PGMEA | 94.7 | A | A |
| | 2-10 | Production Example 2-5 | 1.2 | Pigment Blue 15:6 | 4.1 | Toluene | 94.7 | A | A |
| | 2-11 | Production Example 2-5 | 1.2 | Pigment Blue 15:6 | 4.1 | Butyl cellosolve | 94.7 | A | A |
| | 2-12 | Production Example 2-5 | 1.2 | Pigment Blue 15:6 | 4.1 | Methyl ethyl ketone | 94.7 | A | A |
| | 2-13 | Production Example 2-5 | 1.2 | Pigment Red 177 | 4.1 | PGMEA | 94.7 | A | A |
| | 2-14 | Production Example 2-5 | 1.2 | Pigment Red 254 | 4.1 | PGMEA | 94.7 | A | A |
| | 2-15 | Production Example 2-5 | 1.2 | Zirconia | 4.1 | PGMEA | 94.7 | A | B |
| | 2-16 | Production Example 2-5 | 1.2 | Magnesium oxide | 4.1 | PGMEA | 94.7 | A | B |
| | 2-17 | Production Example 2-5 | 1.2 | Talc | 4.1 | PGMEA | 94.7 | A | B |
| | 2-18 | Production Example 2-5 | 1.2 | Potassium carbonate | 4.1 | PGMEA | 94.7 | A | B |

(continued)

| | | Dispersant | | Fine powder | | Solvent | | Dispersibility | Coating film state |
|---|---|---|---|---|---|---|---|---|---|
| | | Type | Ratio (%) | Type | Ratio (%) | Type | Ratio (%) | | |
| Comparative Example | 2-1 | Comparative Production Example 2-1 | 1.2 | Pigment Blue 15:6 | 4.1 | PGMEA | 94.7 | C | C |
| | 2-2 | Dispersant *1 | 1.2 | Pigment Blue 15:6 | 4.1 | PGMEA | 94.7 | A | A |
| | 2-3 | Dispersant *2 | 1.2 | Pigment Blue 15:6 | 4.1 | PGMEA | 94.7 | C | C |

PGMEA: Propylene glycol monomethyl ether acetate

3. Examples of polyvinyl acetal/polyester graft copolymer obtained by ester exchange reaction with polyester:

[Production Example 3-1: Synthesis of polyester]

In a reactor equipped with a nitrogen-introducing tube, a thermometer, and a reflux condenser, 10.0 parts of methanol, 800.0 parts of ε-caprolactone, and 0.1 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 3,100.

[Production Example 3-2: Synthesis of polyester]

In a reactor equipped with a nitrogen-introducing tube, a thermometer, and a reflux condenser, 50.0 parts of diethylene glycol, 800.0 parts of ε-caprolactone, and 0.1 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 2,000.

[Production Example 3-3: Synthesis of polyester]

In a reactor equipped with a nitrogen-introducing tube, a thermometer, and a reflux condenser, 10.0 parts of diethylene glycol, 800.0 parts of ε-caprolactone, and 0.1 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 8,500.

[Production Example 3-4: Synthesis of polyester]

In a reactor equipped with a nitrogen-introducing tube, a thermometer, and a reflux condenser, 100.0 parts of 2-hydroxyethyl methacrylate, 800.0 parts of ε-caprolactone, and 0.05 parts of tetrabutyl titanate were charged, the temperature was elevated to 160 °C in a nitrogen atmosphere over 4 hours, and heating was carried out at 160 °C until the amount of remaining ε-caprolactone reached not more than 1 %.

The reaction product was a yellow solid and had a weight average molecular weight of 1,200.

[Production Example 3-5: Synthesis of polyester]

In a reactor equipped with a nitrogen-introducing tube, a thermometer, a reflux condenser, and a water separator, 400.0 parts of 1, 6-hexanediol, 436.0 parts of adipic acid, and 0.05 parts of tetrabutyl titanate were charged, the temperature was elevated to 160 °C in a nitrogen atmosphere over 4 hours, and heating was carried out at 160 °C until the acid value reached 1 mgKOH/g.

The reaction product was a yellow solid and had a weight average molecular weight of 4,200.

[Production Example 3-6: Synthesis of polyester]

In a reactor equipped with a nitrogen-introducing tube, a thermometer, a reflux condenser, and a water separator, 800.0 parts of 12-hydroxystearic acid and 0.05 parts of tetrabutyl titanate were charged, the temperature was elevated to 160 °C in a nitrogen atmosphere over 4 hours, and heating was carried out at 160 °C until the acid value reached 31 mgKOH/g.

The reaction product was a yellow solid and had a weight average molecular weight of 1,800.

[Production Example 3-7: Synthesis of polyvinyl acetal/polyester graft copolymer]

In a reactor equipped with a nitrogen-introducing tube, a thermometer, and a reflux condenser, 49.7 parts of polyvinyl butyral (a trade name: "S-LEC BL-1", manufactured by Sekisui Chemical Co., Ltd.; weight average molecular weight: about 19, 000, hydroxyl group: about 36 % by mole, acetyl group: not more than 3 % by mole, degree of butyralization: about 63 ± 3 % by mole), 50.3 parts (8 % by mole relative to the hydroxyl group) of the polyester of Production Example 2, and 0.05 parts of tetrabutyl titanate were charged, the temperature was elevated to 200 °C in a nitrogen atmosphere, and heating was carried out for 6 hours.

The reaction product was a yellow viscous liquid and had a weight average molecular weight of 67,500 and a rate of introduction of polyester of 65.2 %.

[Production Examples 3-8 to 3-25: Synthesis of polyvinyl acetal/polyester graft polymer]

Polyvinyl butyral/polyester graft polymers were produced according to blending and reaction conditions shown in the following Table 5 in the same manner as that in Production Example 3-7.

[Comparative Production Example 3-1: Synthesis of polyethyleneimine/polyester graft copolymer]

In a reactor equipped with a nitrogen-introducing tube, a thermometer, a reflux condenser, and a water measuring tube, 8.1 parts of polyethyleneimine (a trade name: "LUPASOL PR8515", weight average molecular weight: 2,000), 91.9 parts of the polyester of Production Example 3-1, and 0.05 parts of tetrabutyl titanate were charged, the temperature was elevated to 200 °C in a nitrogen atmosphere, and heating was carried out for 6 hours.
The reaction product was a brown liquid and had an amine value of 45.5 mgKOH/g.

<Molecular weight of polyvinyl acetal/polyester graft copolymer>

The average molecular weight of the polyvinyl acetal/polyester graft copolymer was measured by means of gel permeation chromatography (GPC) using tetrahydrofuran as a solvent.

<Measurement of rate of introduction of polyester>

The rate of introduction of polyester of the polyvinyl acetal/polyester graft copolymer was determined from measurement results of GPC according to the following expression.

$$\text{Rate of introduction of polyester (\%)} = (a - b)/a \times 100$$

a: Area ratio of polyester before the reaction (%)
b: Area ratio of polyester after the reaction (%)

Table 5

| Production Example | Polyvinyl acetal | | Polyester | | | Reaction temperature (°C) | Reaction time (h) | Weight average molecular weight | Rate of introduction of polyester (%) |
|---|---|---|---|---|---|---|---|---|---|
| | Type | Charged amount (parts) | Type | Charged amount | | | | | |
| | | | | (Parts) | (% by mole relative to hydroxyl group) | | | | |
| 3-7 | S-LEC BL-1 | 49.7 | Production Example 3-1 | 50.3 | 4 | 200 | 7 | 67,500 | 65.2 |
| 3-8 | S-LEC BL-1 | 49.7 | Production Example 3-1 | 50.3 | 4 | 140 | 7 | 48,300 | 43.9 |
| 3-9 | S-LEC BL-1 | 49.7 | Production Example 3-1 | 50.3 | 4 | 220 | 7 | 77,500 | 69.1 |
| 3-10 | S-LEC BL-1 | 49.7 | Production Example 3-1 | 50.3 | 4 | 200 | 3 | 34,000 | 31.1 |
| 3-11 | S-LEC BL-1 | 49.7 | Production Example 3-1 | 50.3 | 4 | 200 | 12 | 71,300 | 68.2 |
| 3-12 | S-LEC BL-1 | 16.5 | Production Example 3-1 | 83.5 | 20 | 200 | 7 | 123,100 | 79.1 |
| 3-13 | S-LEC BL-1 | 9.0 | Production Example 3-1 | 91.0 | 40 | 200 | 7 | 191,300 | 58.2 |
| 3-14 | S-LEC BX-L*1 | 9.0 | Production Example 3-1 | 83.5 | 20 | 200 | 7 | 208,200 | 39.6 |
| 3-15 | S-LEC BL-1 | 43.3 | Production Example 3-2 | 56.7 | 8 | 200 | 7 | 41,800 | 75.6 |
| 3-16 | S-LEC BL-1 | 41.9 | Production Example 3-3 | 58.1 | 2 | 200 | 7 | 46,800 | 82.3 |
| 3-17 | S-LEC BL-1 | 20.3 | Production Example 3-4 | 79.7 | 40 | 200 | 7 | 85,300 | 21.5 |
| 3-18 | S-LEC BL-1 | 26.6 | Production Example 3-5 | 73.4 | 8 | 200 | 7 | 70,500 | 52.1 |
| 3-19 | S-LEC BL-1 | 25.3 | Production Example 3-6 | 74.7 | 20 | 200 | 7 | 74,200 | 32.5 |

(continued)

| Production Example | Polyvinyl acetal | | Polyester | | | Reaction temperature (°C) | Reaction time (h) | Weight average molecular weight | Rate of introduction of polyester (%) |
|---|---|---|---|---|---|---|---|---|---|
| | Type | Charged amount (parts) | Type | Charged amount | | | | | |
| | | | | (Parts) | (% by mole relative to hydroxyl group) | | | | |
| 3-20 | S-LEC BL-1 | 45.8 | Production Example 3-6 | 54.2 | 8 | 200 | 7 | 55,200 | 70.2 |
| 3-21 | S-LEC BL-1 | 3.0 | PLACCEL H1P *2 | 97.0 | 40 | 200 | 7 | 597,700 | 41.6 |
| 3-22 | S-LEC BL-1 | 46.8 | PLACCEL H1P | 53.2 | 2 | 200 | 7 | 36,100 | 32.1 |
| 3-23 | S-LEC BL-1 | 43.3 | PLACCEL 240 *3 | 56.7 | 4 | 200 | 7 | 71,500 | 65.2 |
| 3-24 | S-LEC BL-1 | 60.5 | PLACCEL 230 *4 | 49.5 | 4 | 200 | 7 | 62,000 | 59.8 |
| 3-25 | S-LEC BX-L*1 | 23.4 | PLACCEL H1P | 76.6 | 4 | 200 | 7 | 91,700 | 59.1 |

Incidentally, in Table 5, details of the polyvinyl acetal used in Production Example 3-14 and 3-25 and the polyesters used in Production Examples 3-21 to 3-25 are as follows.

*1: A trade name "S-LEC BX-L", manufactured by Sekisui Chemical Co., Ltd. for polyvinyl acetal; average molecular weight: about 20,000, hydroxyl group: 37 ± 3 % by mole, acetyl group: not more than 3 % by mole, degree of acetalization: about 61 % by mole.
*2: A trade name "PLACCEL H1P", manufactured by Daicel Corporation, polycaprolactone; molecular weight 10,000
*3: A trade name "PLACCEL 240", manufactured by Daicel Corporation, polycaprolactone diol; molecular weight 4,000
*4: A trade name "PLACCEL 230", manufactured by Daicel Corporation, polycaprolactone diol; molecular weight 3,000

<Heat resistance test>

A heat resistance test of each of the polyvinyl acetal/polyester graft copolymers obtained in the foregoing Production Examples 3-7 to 3-25 and the polyethyleneimine/polyester graft copolymer obtained in the foregoing Comparative Production Example 3-1 was carried out in the following manner. Results are shown in Table 6. Color difference:

0.5 mg of the dispersant was dissolved in 20 mL of methylene chloride and mixed with 10 g of a silica gel, and the mixture was dried at room temperature. A half amount of the obtained silica gel was heat treated at 200 °C for one hour, and a color difference before and after the treatment was measured.

Heat resistance:

The heat resistance was decided on the basis of the color difference according to the following criteria.
A: The color difference (ΔE) is from 0 to 5.
B: The color difference (ΔE) is more than 5 and less than 10.
C: The color difference (ΔE) is 10 or more.

Table 6

| | Dispersant Color difference (ΔE) | | Heat difference |
|---|---|---|---|
| Product obtained according to the invention | Production Example 3-7 | 2.9 | A |
| | Production Example 3-8 | 1.2 | A |
| | Production Example 3-9 | 3.9 | A |
| | Production Example 3-10 | 1.7 | A |
| | Production Example 3-11 | 3.1 | A |
| | Production Example 3-12 | 1.6 | A |
| | Production Example 3-13 | 3.9 | A |
| | Production Example 3-14 | 3.6 | A |
| | Production Example 3-15 | 3.0 | A |
| | Production Example 3-16 | 3.2 | A |
| | Production Example 3-17 | 3.1 | A |
| | Production Example 3-18 | 3.2 | A |
| | Production Example 3-19 | 3.2 | A |
| | Production Example 3-20 | 2.6 | A |
| | Production Example 3-21 | 2.7 | A |
| | Production Example 3-22 | 2.9 | A |
| | Production Example 3-23 | 3.1 | A |
| | Production Example 3-24 | 3.0 | A |

(continued)

| | Dispersant Color difference (ΔE) | | Heat difference |
|---|---|---|---|
| | Production Example 3-25 | 3.5 | A |
| Comparative product | Comparative Production Example 3-1 | 16.4 | C |
| | Dispersant *1 | 12.5 | C |
| | Dispersant *2 | 13.1 | C |

Incidentally, details of the dispersants which are targets for comparison other than that of Comparative Production Example 3-1 are as follows.

*1: A trade name: "AJISPER PB-822", manufactured by Ajinomoto Fine-Techno Co., Inc., dispersant for a polymer based pigment; amine value: 17 mgKOH/g, acid value: 14 mgKOH/g

*2: A trade name: "S-LEC BL-1", manufactured by Sekisui Chemical Co., Ltd. for polyvinyl butyral; weight average molecular weight: about 19, 000, hydroxyl group: about 36 % by mole, acetyl group: not more than 3 % by mole, degree of butyralization: about 63 ± 3 % by mole

<Dispersibility test>

Each of the polyvinyl acetal/polyester graft copolymers obtained in the foregoing Production Examples and the dispersants as targets for comparison was dissolved in a dispersion medium shown in Table 7, to which were then added solid particles shown in Table 7, and the mixture was stirred in a ball mill for 24 hours, thereby preparing a solid particle dispersion. Dispersibility at the time of completion of stirring was visually observed and evaluated according to the following criteria. Results are shown in Table 7.

A: All of the solid particles are dispersed in the liquid, and precipitation does not occur in the bottom at all.
B: Though almost all of the solid particles are dispersed in the liquid, precipitation slightly occurs in the bottom.
C: About a half of the solid particles precipitate in the liquid.
D: Almost all of the solid particles precipitate in the bottom.

<Test of coating film state>

To 10.0 parts of the dispersion after the dispersibility test, 0.4 parts of an acrylic resin (a trade name: "ACRYPET MD", manufactured by Mitsubishi Rayon Co. , Ltd.) was added and dissolved with stirring. The obtained mixed liquid was subjected to flow coating on a slide glass and dried in an oven at 120 °C for one hour. The obtained coating film was visually observed and evaluated according to the following criteria. Results are shown in Table 7.

A: The obtained coating film is transparent.
B: The obtained coating film is cloudy.
C: The solid particles aggregate, and the obtained coating film is not transparent.

Table 7

| | | Dispersant | | Fine powder | | Solvent | | Dispersibility | Coating film state |
|---|---|---|---|---|---|---|---|---|---|
| | | Type | Ratio (%) | Type | Ratio (%) | Type | Ratio (%) | | |
| Example | 3-1 | Production Example 3-7 | 1.2 | Pigment Blue 15:6 | 4.1 | PGMEA | 94.7 | A | A |
| | 3-2 | Production Example 3-8 | 1.2 | Pigment Blue 15:6 | 4.1 | PGMEA | 94.7 | A | A |
| | 3-3 | Production Example 3-9 | 1.2 | Pigment Blue 15:6 | 4.1 | PGMEA | 94.7 | A | A |
| | 3-4 | Production Example 3-10 | 1.2 | Pigment Blue 15:6 | 4.1 | PGMEA | 94.7 | A | A |
| | 3-5 | Production Example 3-11 | 1.2 | Pigment Blue 15:6 | 4.1 | PGMEA | 94.7 | A | A |
| | 3-6 | Production Example 3-12 | 1.2 | Pigment Blue 15:6 | 4.1 | PGMEA | 94.7 | A | A |
| | 3-7 | Production Example 3-13 | 1.2 | Pigment Blue 15:6 | 4.1 | PGMEA | 94.7 | A | A |
| | 3-8 | Production Example 3-14 | 1.2 | Pigment Blue 15:6 | 4.1 | PGMEA | 94.7 | A | A |
| | 3-9 | Production Example 3-15 | 1.2 | Pigment Blue 15:6 | 4.1 | PGMEA | 94.7 | A | A |
| | 3-10 | Production Example 3-16 | 1.2 | Pigment Blue 15:6 | 4.1 | PGMEA | 94.7 | A | A |
| | 3-11 | Production Example 3-17 | 1.2 | Pigment Blue 15:6 | 4.1 | PGMEA | 94.7 | A | A |
| | 3-12 | Production Example 3-18 | 1.2 | Pigment Blue 15:6 | 4.1 | PGMEA | 94.7 | A | A |
| | 3-13 | Production Example 3-19 | 1.2 | Pigment Blue 15:6 | 4.1 | PGMEA | 94.7 | A | A |
| | 3-14 | Production Example 3-20 | 1.2 | Pigment Blue 15:6 | 4.1 | PGMEA | 94.7 | A | A |
| | 3-15 | Production Example 3-21 | 1.2 | Pigment Blue 15:6 | 4.1 | PGMEA | 94.7 | A | A |
| | 3-16 | Production Example 3-22 | 1.2 | Pigment Blue 15:6 | 4.1 | PGMEA | 94.7 | A | A |
| | 3-17 | Production Example 3-23 | 1.2 | Pigment Blue 15:6 | 4.1 | PGMEA | 94.7 | A | A |
| | 3-18 | Production Example 3-24 | 1.2 | Pigment Blue 15:6 | 4.1 | PGMEA | 94.7 | A | A |
| | 3-19 | Production Example 3-25 | 1.2 | Pigment Blue 15:6 | 4.1 | PGMEA | 94.1 | A | A |
| | 3-20 | Production Example 3-7 | 1.2 | Pigment Blue 15:6 | 4.1 | Toluene | 94.7 | A | A |

(continued)

| | | Dispersant | | Fine powder | | Solvent | | Dispersibility | Coating film state |
|---|---|---|---|---|---|---|---|---|---|
| | | Type | Ratio (%) | Type | Ratio (%) | Type | Ratio (%) | | |
| Example | 3-21 | Production Example 3-7 | 1.2 | Pigment Blue 15:6 | 4.1 | Butyl cellosolve | 94.7 | A | A |
| | 3-22 | Production Example 3-7 | 1.2 | Pigment Blue 15:6 | 4.1 | Methyl ethyl ketone | 94.7 | A | A |
| | 3-23 | Production Example 3-7 | 1.2 | Pigment Blue 15:6 | 4.1 | n-Hexane | 94.7 | A | A |
| | 3-24 | Production Example 3-7 | 1.2 | Pigment Red 177 | 4.1 | PGMEA | 94.7 | A | A |
| | 3-25 | Production Example 3-7 | 1.2 | Pigment Red 254 | 4.1 | PGMEA | 94.7 | A | A |
| | 3-26 | Production Example 3-7 | 1.2 | Zirconia | 4.1 | PGMEA | 94.7 | A | A |
| | 3-27 | Production Example 3-7 | 1.2 | Magnesium oxide | 4.1 | PGMEA | 94.7 | A | A |
| | 3-28 | Production Example 3-7 | 1.2 | Talc | 4.1 | PGMEA | 94.7 | A | A |
| | 3-29 | Production Example 3-7 | 1.2 | Potassium carbonate | 4.1 | PGMEA | 94.7 | A | A |
| Comparative Example | 3-1 | Production Example 1-1 | 1.2 | Pigment Blue 15:6 | 4.1 | PGMEA | 94.7 | D | C |
| | 3-2 | Comparative Production Example 1-1 | 1.2 | Pigment Blue 15:6 | 4.1 | PGMEA | 94.7 | B | B |
| | 3-3 | Dispersant *1 | 1.2 | Pigment Blue 15:6 | 4.1 | PGMEA | 94.7 | A | A |
| | 3-4 | Dispersant *2 | 1.2 | Pigment Blue 15:6 | 4.1 | PGMEA | 94.7 | C | C |
| PGMEA: Propylene glycol monomethyl ether acetate | | | | | | | | | |

INDUSTRIAL APPLICABILITY

In dispersing solid particles in a nonaqueous liquid in the fields of paints, printing inks, toners for electrostatic copying, plastics, pigment printing agents, inks for inkjet printing, inks for thermal transfer recording, resists for color filter, inks for writing, etc., the dispersant of the invention prevents aggregation of the solid particles in a dispersion liquid from occurring and is extremely effective for forming a stable dispersion liquid.

## Claims

1. A method for producing a polyvinyl acetal/polyester graft copolymer, **characterized by** allowing a polyvinyl acetal having one or more of each of constituent units represented by the following general formulae (1) to (3) and having a weight average molecular weight of from 100 to 100,000 and a polyester having at least one carboxyl group at an end of a main chain thereof and having a weight average molecular weight of from 100 to 50,000 to react with each other, wherein
from 4 to 50 % by mole of a hydroxyl group which the polyvinyl acetal has formed a graft bond with the polyester, wherein the hydroxyl group of the polyvinyl acetal forms a graft with the terminal carboxyl group of the polyester:

[Ka 1]

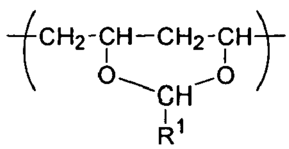

(1)

wherein $R^1$ represents a hydrogen atom, a linear or branched alkyl group having a carbon number of from 1 to 20, or an aryl group, in which the alkyl group or the aryl group may have a substituent, and

[Ka 2]

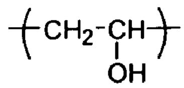

(2)

[Ka 3]

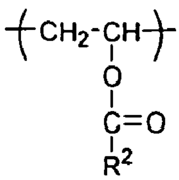

(3)

wherein $R^2$ represents a hydrogen atom, a linear or branched alkyl group having a carbon number of from 1 to 20, or an aryl group, in which the alkyl group or the aryl group may have a substituent, wherein the polyester is obtainable by allowing a hydroxycarboxylic acid and/or a polycondensate thereof and a lactone compound represented by the following general formula (4) to react with each other:

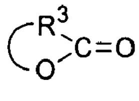

(4)

wherein $R^3$ represents a linear or branched alkylene group having a carbon number of from 2 to 20, and the alkylene group may have a substituent, and the reaction ratio of the hydroxycarboxylic acid to the lactone compound is in the range of from 1/1 to 1/100, and wherein the content of the hydroxyl group is determined as described in the

description.

**2.** A method for producing a polyvinyl acetal/polyester graft copolymer, **characterized by** allowing a polyvinyl acetal having one or more of each of constituent units represented by the following general formulae (1) to (3) and having a weight average molecular weight of from 100 to 100,000 and a polyester having a weight average molecular weight of from 100 to 50,000 to react with each other, wherein
from 2 to 50 % by mole of a hydroxyl group which the polyvinyl acetal has formed a bond by an ester exchange reaction with the polyester:

[Ka 7]

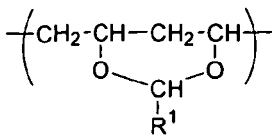

(1)

wherein $R^1$ represents a hydrogen atom, a linear or branched alkyl group having a carbon number of from 1 to 20, or an aryl group, in which the alkyl group or the aryl group may have a substituent, and

[Ka 8]

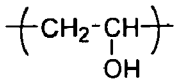

(2)

[Ka 9]

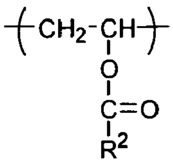

(3)

wherein $R^2$ represents a hydrogen atom, a linear or branched alkyl group having a carbon number of from 1 to 20, or an aryl group, in which the alkyl group or the aryl group may have a substituent, wherein the polyester is obtainable by a ring-opening polymerization reaction of a lactone compound, a polycondensation reaction between a polyvalent carboxylic acid and a polyhydric alcohol, a polycondensation reaction of a hydroxycarboxylic acid, and wherein the content of the hydroxyl group is determined as described in the description.

**3.** A dispersant containing the polyvinyl acetal/polyester graft copolymer obtainable by the method according to claim 1 or 2.

**4.** A solid particle dispersion having solid particles dispersed in a nonaqueous liquid by the dispersant according to claim 3 or by a dispersant containing a polyvinyl acetal/polyester graft copolymer, which is obtained subjecting a polyvinyl acetal having one or more of each of constituent units represented by the following general formulae (1) to (3) and having a weight average molecular weight of from 100 to 100,000 to addition polymerization with a lactone in an amount of from 1 to 50 molar equivalents to a hydroxyl group which this polyvinyl acetal has:

[Ka 4]

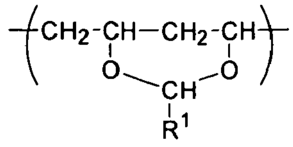

(1)

wherein $R^1$ represents a hydrogen atom, a linear or branched alkyl group having a carbon number of from 1 to 20, or an aryl group, in which the alkyl group or the aryl group may have a substituent, and

[Ka 5]

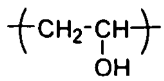

(2)

[Ka 6]

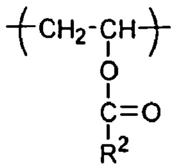

(3)

wherein $R^2$ represents a hydrogen atom, a linear or branched alkyl group having a carbon number of from 1 to 20, or an aryl group, in which the alkyl group or the aryl group may have a substituent.

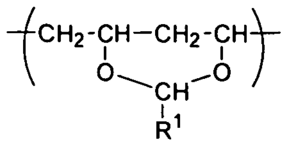

(1)

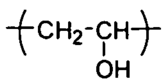

(2)

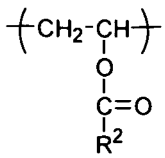

(3)

**Patentansprüche**

1. Verfahren zum Herstellen eines Polyvinylacetal / Polyester-Pfropf-Copolymers, **gekennzeichnet dadurch, dass** man ein Polyvinylacetal mit einer oder mehreren von jeder der konstituierenden Einheiten, dargestellt durch die folgenden allgemeinen Formeln (1) bis (3) und mit einem gewichtsgemittelten Molekulargewicht von 100 bis 100.000, und einem Polyester mit mindestens einer Carboxylgruppe an einem Ende einer seiner Hauptkette und mit einem

gewichtsgemittelten Molekulargewicht von 100 bis 50000 miteinander reagieren lässt, wobei 4-50 Mol% von Hydroxylgruppen des Polyvinylacetals eine Pfropfbindung mit dem Polyester hat, wobei die Hydroxylgruppe des Polyvinylacetals einen Pfropf mit der endständigen Carboxylgruppe des Polyesters bildet:

[Ka 1]

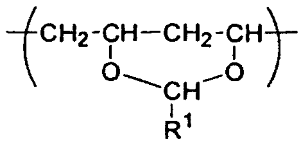

(1)

wobei $R^1$ ein Wasserstoffatom, eine lineare oder verzweigte Alkylgruppe mit einer Kohlenstoffzahl von 1 bis 20 oder eine Arylgruppe ist, wobei die Alkylgruppe oder die Arylgruppe einen Substituenten haben kann, und

[Ka 2]

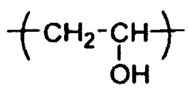

(2)

[Ka 3]

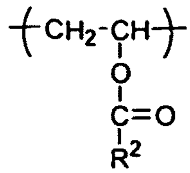

(3)

wobei $R^2$ ein Wasserstoffatom, eine lineare oder verzweigte Alkylgruppe mit einer Kohlenstoffzahl von 1 bis 20, oder eine Arylgruppe darstellt, wobei die Alkylgruppe oder die Arylgruppe einen Substituenten haben kann, wobei das Polyester dadurch erhalten werden kann, dass man eine Hydroxycarbonsäure und/oder ein Polykondensat davon und eine durch die folgende allgemeine Formel (4) dargestellte Lacton-Verbindung miteinander reagieren lässt:

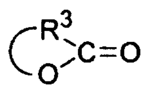

(4)

wobei $R^3$ eine lineare oder verzweigte Alkylengruppe mit einer Kohlenstoffzahl von 2 bis 20 ist, wobei die Alkylengruppe einen Substituenten haben kann, und das Reaktionsverhältnis der Hydroxycarbonsäure und der Lactonverbindung in einem Bereich von 1/1 zu 1/100 liegt und wobei der Gehalt der Hydroxylgruppe wie in der Beschreibung angegeben ermittelt wird.

2. Verfahren zum Herstellen eines Polyvinylacetal / Polyester-Pfropf-Copolymers, **gekennzeichnet dadurch, dass** man ein Polyvinylacetal mit einer oder mehreren von jeder der konstituierenden Einheiten, dargestellt durch die folgenden allgemeinen Formeln (1) bis (3) und mit einem gewichtsgemittelten Molekulargewicht von 100 bis 100.000 und einem Polyester mit einem gewichtsgemittelten Molekulargewicht von 100 bis 50000 miteinander reagieren lässt, wobei 2-50 Mol% der Hydroxylgruppen des Polyvinylacetals eine Bindung aufgrund einer Ester-Austauschreaktion mit dem Polyester gebildet hat:

[Ka 7]

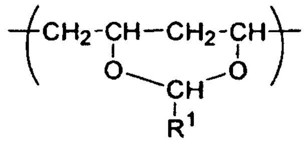

(1)

wobei $R^1$ ein Wasserstoffatom, eine lineare oder verzweigte Alkylgruppe mit einer Kohlenstoffzahl von 1 bis 20 oder eine Arylgruppe ist, wobei die Alkylgruppe oder die Arylgruppe einen Substituenten haben kann, und

[Ka 8]

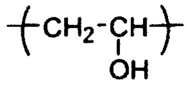

(2)

[Ka 9]

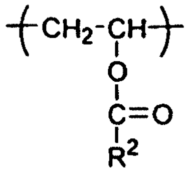

(3)

wobei $R^2$ ein Wasserstoffatom, eine lineare oder verzweigte Alkylgruppe mit einer Kohlenstoffzahl von 1 bis 20, oder eine Arylgruppe darstellt, wobei die Alkylgruppe oder die Arylgruppe einen Substituenten haben kann, wobei das Polyester durch eine Ring-Öffnungsreaktion einer Lacton-Verbindung, eine Polykondensationsreaktion zwischen einer polyvalenten Carboxylsäure und einem mehrwertigen Alkohol oder eine Polykondensationsreaktion einer Hydroxycarbonsäure erhalten werden kann und wobei der Gehalt der Hydroxylgruppe wie in der Beschreibung angegeben ermittelt wird.

3. Dispersionsmittel, welches das Polyvinylacetal / Polyester-Pfropf-Copolymer enthält, das durch das Verfahren nach Anspruch 1 oder 2 gewonnen werden kann.

4. Feststoffpartikel-Dispersion fester Teilchen in einer nichtwässrigen Flüssigkeit, die dispergiert ist durch das Dispersionsmittel nach Anspruch 3 oder durch ein Dispersionsmittel erhalten wirde, welches ein Polyvinylacetal / Polyester-Pfropf-Copolymer enthält, das gewonnen wurde dadurch, dass man ein Polyvinylacetal mit einem oder mehreren von jedem der konstituierenden Einheiten, dargestellt durch die folgenden allgemeinen Formeln (1) bis (3) und mit einem gewichtsgemittelten Molekulargewicht von 100 bis 100.000, einer Additions-Polymerisation mit einem Lacton in einer Menge von 1 bis 50 Mol-Äquivalenten der Hydroxylgruppen des Polyvinlyacetals unterzieht:

[Ka4]

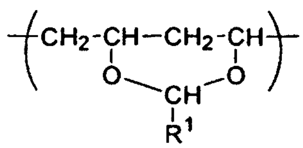

(1)

wobei $R^1$ ein Wasserstoffatom, eine lineare oder verzweigte Alkylgruppe mit einer Kohlenstoffzahl von 1 bis 20 oder

eine Arylgruppe ist, wobei die Alkylgruppe oder die Arylgruppe einen Substituenten haben kann, und

[Ka 5]

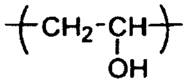

(2)

[Ka 6]

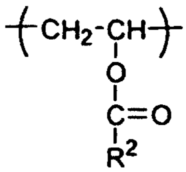

(3)

wobei $R^2$ ein Wasserstoffatom, eine lineare oder verzweigte Alkylgruppe mit einer Kohlenstoffzahl von 1 bis 20, oder eine Arylgruppe darstellt, wobei die Alkylgruppe oder die Arylgruppe einen Substituenten haben kann.

## Revendications

**1.** Procédé de production d'un copolymère greffé de poly(acétal de vinyle)/polyester, **caractérisé par** laisser un poly(acétal de vinyle) ayant une ou plusieurs de chacune des unités constituantes représentées par les formules générales (1) à (3) suivantes et ayant un poids moléculaire moyen en poids de 100 à 100 000 et un polyester ayant au moins un groupe carboxyle à une extrémité d'une chaîne principale de celui-ci et ayant un poids moléculaire moyen en poids de 100 à 50 000 réagir l'un avec l'autre, dans lequel
de 4 à 50% par mole d'un groupe hydroxyle que le poly(acétal de vinyle) possède a formé une liaison par greffage avec le polyester, dans lequel le groupe hydroxyle du poly(acétal de vinyle) forme une greffe avec le groupe carboxyle terminal du polyester :

[Formule 1]

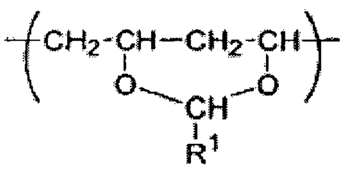

(1)

dans laquelle $R^1$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant, et

[Formule 2]

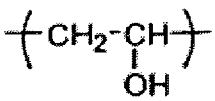

(2)

[Formule 3]

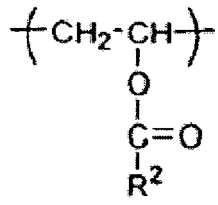

(3)

dans laquelle $R^2$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant, dans lequel le polyester peut être obtenu en laissant un acide hydroxycarboxylique et/ou un polycondensat de celui-ci et un composé lactone représenté par la formule générale (4) suivante réagir l'un avec l'autre :

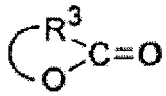

(4)

dans laquelle $R^3$ représente un groupe alkylène linéaire ou ramifié ayant un nombre de carbones de 2 à 20, et le groupe alkylène peut avoir un substituant, et le rapport réactionnel de l'acide hydroxycarboxylique sur le composé lactone est dans la plage de 1/1 à 1/100, et dans lequel la teneur du groupe hydroxyle est déterminée comme décrit dans la description.

2. Procédé de production d'un copolymère greffé de poly(acétal de vinyle)/polyester, **caractérisé par** laisser un poly(acétal de vinyle) ayant une ou plusieurs de chacune des unités constituantes représentées par les formules générales (1) à (3) suivantes et ayant un poids moléculaire moyen en poids de 100 à 100 000 et un polyester ayant un poids moléculaire moyen en poids de 100 à 50 000 réagir l'un avec l'autre, dans lequel
de 2 à 50% par mole d'un groupe hydroxyle que le poly(acétal de vinyle) possède a formé une liaison par une réaction d'échange d'esters avec le polyester :

[Formule 7]

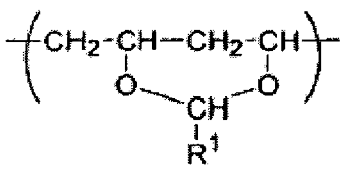

(1)

dans laquelle $R^1$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant, et

[Formule 8]

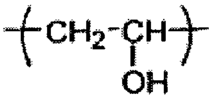

(2)

[Formule 9]

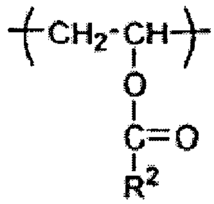

(3)

dans laquelle $R^2$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant, dans lequel le polyester peut être obtenu par une réaction de polymérisation par ouverture de cycle d'un composé lactone, une réaction de polycondensation entre un acide carboxylique polyvalent et un alcool polyhydrique, une réaction de polycondensation d'un acide hydroxycarboxylique, et dans lequel la teneur du groupe hydroxyle est déterminée comme décrit dans la description.

**3.** Dispersant contenant le copolymère greffé de poly(acétal de vinyle)/polyester pouvant être obtenu par le procédé selon la revendication 1 ou 2.

**4.** Dispersion de particules solides ayant des particules solides dispersées dans un liquide non aqueux par le dispersant selon la revendication 3 ou par un dispersant contenant un copolymère greffé de poly(acétal de vinyle)/polyester, qui est obtenu en soumettant un poly(acétal de vinyle) ayant une ou plusieurs de chacune des unités constituantes représentées par les formules générales (1) à (3) suivantes et ayant un poids moléculaire moyen en poids de 100 à 100 000 à une polymérisation par addition avec une lactone dans une quantité de 1 à 50 équivalents molaires à un groupe hydroxyle que ce poly(acétal de vinyle) possède :

[Formule 4]

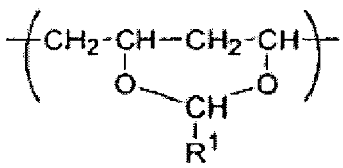

(1)

dans laquelle $R^1$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant, et

[Formule 5]

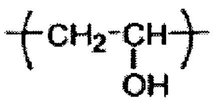

(2)

[Formule 6]

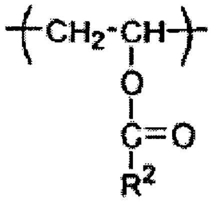

(3)

dans laquelle $R^2$ représente un atome d'hydrogène, un groupe alkyle linéaire ou ramifié ayant un nombre de carbones de 1 à 20, ou un groupe aryle, dans laquelle le groupe alkyle ou le groupe aryle peut avoir un substituant.

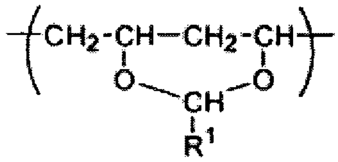

(1)

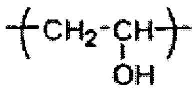

(2)

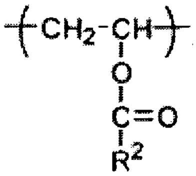

(3)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9176511 A
- JP 7207012 A
- JP 9169821 A
- JP 8100024 A